Europäisches Patentamt

(19) European Patent Office

Office européen des brevets

(11) Publication number: 0 160 466

A2

# (12) EUROPEAN PATENT APPLICATION

(21) Application number: 85302752.2

(22) Date of filing: 18.04.85

(51) Int. Cl.⁴: **B 60 G 17/04**

(30) Priority: 02.05.84 US 606240

(43) Date of publication of application:
06.11.85 Bulletin 85/45

(84) Designated Contracting States:
DE FR GB IT SE

(71) Applicant: GENERAL MOTORS CORPORATION
General Motors Building 3044 West Grand Boulevard
Detroit Michigan 48202(US)

(72) Inventor: Pangos, William
270 North Village Drive
Centerville Ohio 45459(US)

(74) Representative: Breakwell, John Neil Bower et al,
GM Patent Section Luton Office (F6) P.O. Box No. 3
Kimpton Road
Luton Beds. LU2 OSY(GB)

(54) Pneumatic levelling system for a vehicle.

(57) A pneumatic levelling system for a vehicle includes a pressure-balancing valve assembly 58 incorporated within a removable end cap (68) of the system air dryer (42). The pressure-balancing valve assembly is operative to limit the pressure in the pneumatic suspension units (34) while allowing effective pump-up and restriction-release for desiccant regeneration in accordance with changes in vehicle loading.

Fig.3

Croydon Printing Company Ltd

PNEUMATIC LEVELLING SYSTEM FOR A VEHICLE

This invention relates to a pneumatic levelling system for a vehicle as specified in the preamble of claim 1, for example as disclosed in US-A-4 105 216.

Prior to the present invention, as is exemplified by the disclosure of the said US-A-4 105 216, various automatic levelling systems for vehicles have incorporated air-adjustable shock absorbers in parallel with rear suspension springs to adjust the height at the rear of the vehicle body in response to changes in vehicle loading. In addition to the air-adjustable shock absorbers, such levelling systems generally include a compressor assembly, an air dryer, a height sensor and exhaust valving, to control the pressures within the system for vehicle levelling purposes.

In some systems, pressure-control valves of the general type disclosed in US-A-3 911 988 are connected by means of special fittings in the pressure line between the compressor and the air-adjustable shock absorbers, to limit the pressure in the elastomeric air sleeves of the shock absorbers and to ensure optimum ride and handling qualities. Such valves restrict to a predetermined maximum limit the relatively high pressure supplied to the rear air-adjustable shock absorbers, to provide protection for the air sleeves and the pneumatic system.

The present invention is concerned with a new and improved levelling system for a vehicle which incorporates a pressure-control valve assembly for controlling and balancing the pressure between the air-adjustable suspension unit and the compressor.

To this end a pneumatic levelling system for a vehicle in accordance with the present invention is characterised by the features specified in the characterising portion of claim 1.

The disposition of the pressure-control valve assembly internally within the air dryer assembly eliminates the need for external pressure control valves as used in the prior systems, and the leak points necessarily associated therewith.

In the preferred embodiment of the present invention, the pressure-control valve assembly is integrated directly into the cover assembly of the air dryer, to provide for new and improved control and balancing of levelling system pressures which eliminates the need for a separate (external) pressure-limiter or like pressure-control valve and its two external fittings in the pressure line of the system. A minimum-pressure-retention valve, for preventing collapse of the elastomeric sleeves of the suspension unit and likely consequent excessive friction and possible damage to the sleeves, is disposed within a cover assembly of the air dryer housing, and a pressure-control valve constituted by a pressure-limiter valve is disposed within a removable end cap of the air dryer housing, where it is readily accessible for installation, inspection and repair or replacement.

In this way suspension unit pressures can be held to predetermined minimum and maximum pressures, to ensure optimum ride and handling characteristics, and the pressure-control valve may utilise relatively straight-forward valving.

In the drawing:

Figure 1 is a schematic diagram of a pneumatic levelling system for a vehicle including a preferred embodiment of a pressure-control valve assembly in conformity with the present invention;

Figure 2 is a fragmentary sectional view showing the pressure-control valve assembly, generally along the line 2--2 of Figure 1, in the direction of the arrows; and

Figure 3 is a view similar to that of Figure 2 but showing the pressure-control valve in another condition of operation.

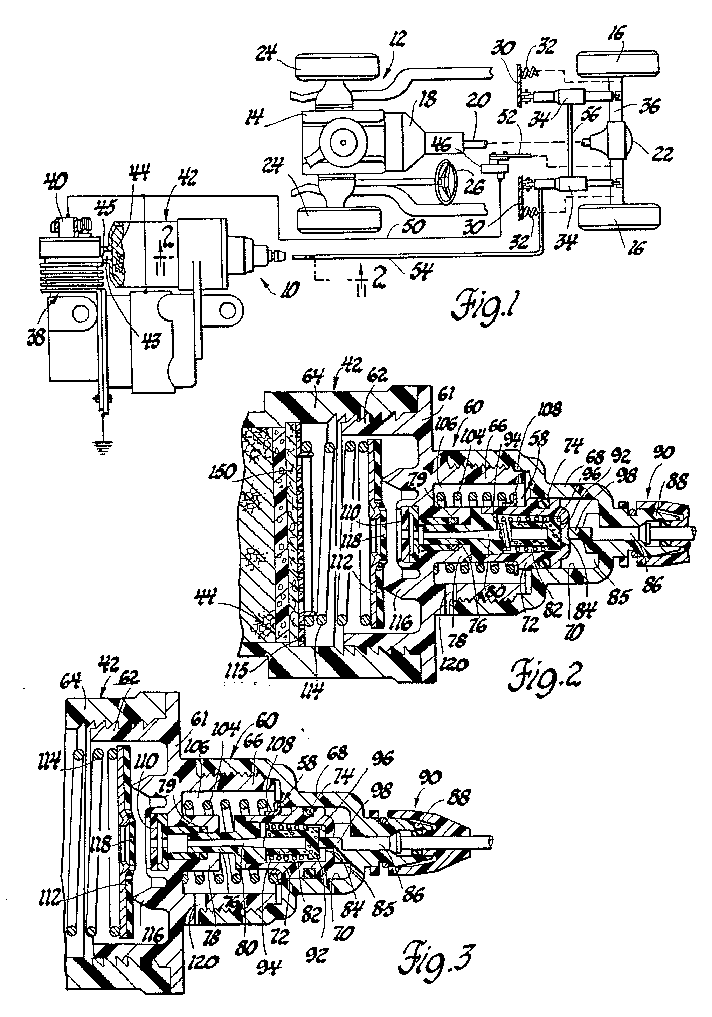

With reference now to the drawing, Figure 1 diagrammatically illustrates a levelling system 10 for a vehicle 12 in which an internal combustion engine 14 drives a pair of rear wheels 16 of the vehicle by way of a change-speed transmission 18, a propeller shaft 20 and a differential 22. A pair of front wheels 24 of the vehicle are steered by a vehicle operator by means of a steering wheel (hand wheel) 26 operatively connected to the front wheels by conventional steering shafts, steering gear and steering linkages, not shown.

The vehicle includes a unitized body 30 conventionally supported at the rear by suspension springs 32 and by pneumatically interconnected air-adjustable shock absorber units 34 which have their lower ends connected to a rear axle housing 36. The shock absorber units may for example correspond to the units disclosed in US-A-3 042 392.

The levelling system 10 has, in addition to the air-adjustable shock absorbers 14, an electrically driven air compressor assembly 38 with intake and exhaust valves, not illustrated, together with a solenoid-operated exhaust valve 40 that releases air from the system when energized, and can additionally vent excessive pressures with a blow-off action. Furthermore, the levelling system 10 includes a generally cylindrical air dryer 42 that is pneumatically attached to the compressor output by an air passage 43 by way of a neck 45 and contains a desiccant 44 such as silica gel that absorbs moisture from the air before the air is delivered to the air-adjustable shock absorbers 34, and returns the moisture to the atmosphere when the system is being exhausted.

Vehicle levelling is controlled by a height sensor 46 that is mounted to the vehicle body and electrically connected to the compressor motor and the exhaust valve solenoid by conductors within a wiring harness 50. The height sensor 46 has a swingable actuator arm 52 operatively attached to the rear wheel axle. When sufficient load is added to the vehicle body, the vehicle body is displaced downwardly, so causing the actuator arm 52 to rotate in one direction from an initial position. When a height control position is reached, the electrical circuit for the compressor is completed, and the compressor runs to supply pressure air to the adjustable shock absorber units 34 by way of the air dryer 42 and pressure tubing 54 forming a pressure line attaching the output of the air dryer to the left-hand shock absorber unit 34. The pneumatic chambers of two air-adjustable shock absorbers are interconnected by pneumatic tubing 56 so that they are pressurized or deflated together. As the air-adjustable shock absorber units inflate, the vehicle body moves upwardly, so rotating the height sensor actuator arm back towards its original position prior to the load addition. Once the vehicle body reaches its range of level height, the sensor opens the compressor relay circuit to shut off the compressor to terminate the upward adjustment.

When an excess load is removed from the rear of the vehicle, the body is forced upwardly by the springs 32, so causing the height sensor actuator arm 52 to rotate in an opposite direction. After an initial delay of a few seconds, provided by activation of an internal timing circuit, not illustrated, the height sensor completes the exhaust solenoid circuit. The exhaust valve then opens and starts exhausting air from the air-adjustable shock absorber units back through the air dryer and exhaust valve into the atmosphere. As the body of the vehicle lowers, the height sensor actuator arm 52 is rotated towards its original position. When the vehicle body reaches its original range of level heights (standing heights), the sensor opens the exhaust solenoid circuit, which closes the exhaust valve 40 to stop further air from escaping.

This invention features a new and improved pressure-control valve assembly in the form of a pressure-balancing valve assembly 58 operatively mounted within a cover assembly 60 of the air dryer 42 to control and limit pressure within the air-adjustable shock absorber units 34. As is best seen in Figures 2 and 3, the cover assembly 60 includes a main closure body 61 that has a large-diameter inwardly extending neck 62 which is threadedly connected into the forward end 64 of the air dryer 42. The body of the cover assembly 60 also has an outwardly extending reduced-diameter externally threaded neck 66 which receives an internally threaded end cap 68.

The end cap 68 of the cover assembly 60 has a reduced-diameter inner cylindrical wall portion 70 within which a pressure-balancing piston 72 is mounted for linear sliding movement. An O-ring 74 carried by the piston 72 is in sliding pneumatic sealing engagement with the inner cylindrical wall portion 70 of the end cap 68. The piston 72 further has a stem 76 which extends axially through a cylindrical guide 78 formed on the closure body inwardly and concentrically located with respect to the threaded neck 66. Annular air-blocking seals 79 are installed between the stem 76 and an inner wall of the cylindrical guide 78. The stem 76 has an axial air passage 80 therethrough which pneumatically connects the interior of the air dryer 42 to an inner chamber 82 formed within the piston 72. This inner chamber 82 communicates with the pneumatic line 54 by way of an orifice 84 in the outboard end of the piston 72, a variable-volume pressure chamber 85 formed in the end cap 68 forwardly of the piston 72, and a passage 86 formed in a terminal end 88 of the cover assembly. The terminal end 88 is part of a quick-connect coupling 90 such as is disclosed in US-A-4 009 896.

Air flow through the orifice 84 is controlled by an internal valve element 92 trapped in the inner chamber 82 and biased by a spring 94 towards a position of engagement with an internal valve seat 96 to block the orifice 84. The valve element 92 can be physically contacted and displaced from its seat 96 by a pin 98 that is axially spaced from the valve element 92 and fixed within the end cap 68. The pin 98 is in axial alignment with the orifice 84, and can project through the orifice to engage and displace the valve element 92 under certain unbalanced pressure conditions. This displacement results from linear movement of the pressure-balancing piston 72 towards the pin 98 by the action of a coil spring 104 that is mounted in a spring pocket 106 and acts against a flanged spring seat 108 fixed to the shank of the piston 72.

The air dryer cover assembly includes a restrictor valve assembly 110 that is secured to the inner wall of the closure body 61 of the cover assembly 60 and is in series with the axial air passage 80 so that exhaust air flow from the shock absorber units 34 is allowed to expand to nearly atmospheric pressure as it enters the desiccant chamber from the air-adjustable shock absorber units, for improved moisture removal. The cover assembly 60 also contains a minimum-pressure-retention valve element 112 biased by a spring 114 seated on a retainer 115 into engagement with a valve seat 116 to retain at least a minimum pressure in the shock absorber units 34 at all times to prevent air pressure in the levelling units from being reduced to a level that allows the elastomeric sleeve of the air spring to collapse on itself and add friction to the suspension. The minimum-pressure-retention valve element 112 includes one-way valving 118 to allow the compressor to supply pressure to the pressure line 54 when such is required by the position of the height control valve. Element 150 is a filter to prevent intrusion of the desiccant into the pressure-balance valving housed within the air dryer cover assembly 60 in conformity with this invention.

Figure 2 shows the valve assembly 58 in a pressure-balanced condition, with pneumatic pressure in the air-adjustable shock absorber units urging the piston 72 to the left as viewed in Figure 2 against the force of the spring 104. The spring force is preselected so that a predetermined pressure is maintained in the air-adjustable shock absorber units for pneumatic suspension purposes. In one preferred embodiment, the spring is selected to provide pressure-balancing at 689 kPa (100 psi).

The pressure-balancing valve assembly 58 operates essentially independently of the height sensor 46 and associated circuitry. Thus when the vehicle body is too low, the height sensor 46 effects energisation of the air compressor assembly 38, to supply pressure air by way of the open pressure-balancing valve assembly 58 (Figure 3 condition) to the air-adjustable shock absorber units 34. In the event of compressor operation continuing after the pressure in the units 34 has reached its predetermined maximum value, the air pressure in the passage 86 will act on the pressure-balancing piston 72 to move the piston to the left into the Figure 2 position, in which the valve element 92 is spaced from the pin 98 and is held by its spring 94 in sealing engagement with the internal valve seat 96 on the piston 72. This prevents further pressure rise in the shock absorber units 34, and excess air pressure from the compressor is vented by a blow-off action at the exhaust valve 40.

In the event of a pressure drop in the air-adjustable shock absorber units, due to leakage in the fittings or in the air sleeve connections, the spring 104 moves the piston 72 to the Figure 3 position in which the pin 98 unseats the valve element 92 to clear the pneumatic passage through the cover assembly 60 so that the compressor can supply pressure air to the air-adjustable shock absorber units 34 until the pressure-balanced condition is again obtained, to provide improved protection of the shock absorber air sleeves as well as other components of the pneumatic system.

A vent 120 in the closure body 61 connects into the spring pocket 106 to exhaust leakage air therefrom.

Although the invention has been described in the context of air-adjustable shock absorber units used in conjunction with suspension springs, the pressure-balancing valve assembly could alternatively be used with air springs or other air suspension units in place of the suspension springs 32 and air-adjustable shock absorber units 34.

-10-

Claims:

1. A pneumatic levelling system for a vehicle comprising a compressor (38) for supplying pressurized air to an air-adjustable suspension unit (34) that is operatively mounted between sprung (30) and unsprung (36) masses of the vehicle, and a pressure-control unit operatively interposed in a pneumatic connection between the compressor (38) and the suspension unit (34), the pressure-control unit including an air dryer housing (42) formed with an air flow passage (86) therethrough, characterised in that a valve assembly (58) is operatively mounted in the air flow passage (86) of the air dryer housing (42), the valve assembly (58) comprising piston means (72) shiftably mounted in the air flow passage (86) and a valve element (92) shiftably mounted in the piston means (72) for movement between a first position in which flow of air through the air flow passage (86) is blocked and a second position in which air can flow through the air flow passage (86), and actuator means (98) in the air dryer housing (42) effective in response to a drop in pressure in the suspension unit (34) to move the valve element (92) from the first to the second position until a predetermined pressure balance is obtained.

2. A pneumatic levelling system according to claim 1, characterised in that the piston means (72) is axially movable in response to the pressure in the suspension unit (34), and that the valve element (92) in its first position engages an internal valve seat (96) in the piston means (72) and in its second position is unseated by the actuator means (98), whereby the valve assembly (58) acts as a pressure-limiting arrangement preventing the supply of air to the suspension unit (34) when the pressure therein exceeds a predetermined pressure but permitting the supply of air to the suspension unit (34) when the pressure therein falls below the predetermined pressure.

3. A pneumatic levelling system according to claim 1 or 2, characterised in that the valve assembly (58) is mounted within a cover assembly (60) constituted by a removable end cap (68) of the air dryer housing (42).

4. A pneumatic levelling system according to claim 3, characterised in that the piston means (72) is slidably mounted in a bore portion (70) of the removable end cap (68).

5. A pneumatic levelling system according to claim 3 or 4, characterised in that the actuator means (98) comprises a pin that is spaced axially from the valve element (92) and is fixed within the removable end cap (68).

6. A pneumatic levelling system according to any one of claims 1 to 5, characterised in that the valve element (92) is biased by means of a spring (94) towards its first position, and the piston means (72) is biased by means of a spring (104) towards a position in which the actuator means (98) is effective to move the valve element (92) into its second position.

7. A pneumatic levelling system according to any one of claims 1 to 6, characterised in that the valve element (92) is slidably mounted in an inner chamber (82) of the piston means (72) which connects with an air flow restriction (80) in the piston means (72).

8. A pneumatic levelling system according to any one of claims 1 to 7, characterised in that the compressor (38) is electrically driven, the pressure control unit includes an exhaust valve (40) that is actuable by means of a solenoid and additionally functions as a blow-off valve for venting excess system pressure supplied by the compressor (38), and compressor drive and energisation of the exhaust valve solenoid are under the selective control of a height sensor (46) that is responsive to the standing height of the vehicle body (30).

9. A pneumatic levelling system according to any one of claims 1 to 8, characterised in that the air dryer housing (42) contains a desiccant (44), and the cover assembly (60) contains a minimum-pressure-retention valve element (112) constructed to close when the air pressure in the suspension unit (34) falls to a predetermined minimum pressure, to retain at least a minimum pressure in the suspension unit (34).

0160466

Fig.1

Fig.2

Fig.3